# EUROPEAN PATENT SPECIFICATION

(11) **EP 4 110 569 B1**
(45) Date of publication and mention of the grant of the patent: **18.06.2025**
(21) Application number: 21724044.9
(22) Date of filing: 26.02.2021
(51) Int. Cl.: B28D 1/04, B28D 7/02, B23D 45/02, B23D 59/00

(54) **A WORKPIECE PLATFORM FOR A DISC SAW APPARATUS, AND DISC SAW APPARATUS COMPRISING THE WORKPIECE PLATFORM**
WERKSTÜCKPLATTFORM FÜR EINE SCHEIBENSÄGEVORRICHTUNG UND SCHEIBENSÄGEVORRICHTUNG MIT DER WERKSTÜCKPLATTFORM
SUPPORT DE PIÈCE POUR UN APPAREIL À SCIE À DISQUE, ET APPAREIL À SCIE À DISQUE COMPRENANT UN TEL SUPPORT DE PIÈCE

(30) Priority: 28.02.2020 IE S20200037
(43) Date of publication of application: 04.01.2023
(73) Proprietor: JFC Arkedia Group Limited, Tuam Galway (IE)
(72) Inventor: CONCANNON, John Francis, Tuam County Galway (IE); GOMEZ, Javier, 4934 Madiswil (CH); VON FLÜE, Fredy, 6053 Alpnachstad (CH); BURGHARDT, Henry, 78239 Rielasingen-Worblingen (DE)
(74) Representative: Gorman, Francis Fergus
(86) International application number: PCT/IE2021/000002
(87) International publication number: WO 2021/171278

(56) References cited:
- EP-A2- 0 010 475
- WO-A1-2018/147776
- US-A- 3 043 408
- US-A1- 2005 205 075

## Description

The present invention relates to a workpiece platform for a disc saw apparatus, and the invention also relates to a disc saw apparatus comprising the workpiece platform.

Disc saw apparatus comprise a disc saw mounted fast on a driven shaft, which is rotatably mounted in a main support housing. The main support housing typically is mounted on an upstanding ground engaging support structure. A bed or basin type structure extends from the upstanding ground engaging structure below the main support housing in which the disc saw is located. A workpiece platform is located in the bed or basin type structure beneath the disc saw for supporting a workpiece to be cut by the disc saw. Either the workpiece platform or the disc saw is moveable relative to the other one of the workpiece platform and the disc saw, so that a workpiece on the workpiece platform is cut as the moveable one of the workpiece platform and the disc saw is moved relative to the other one of the workpiece platform and the disc saw. Such disc saw apparatus will be well known to those skilled in the art.

However, a problem with such disc saw apparatus is that they are suitable for only one type of cutting of a workpiece, namely, they are either suitable for dry cutting of a workpiece or suitable for wet cutting of a workpiece. There are no suitable disc saw apparatus which are readily suited for both dry cutting of workpieces and wet cutting of workpieces. This is particularly so in the case of cutting of masonry and ceramic products, for example, masonry bricks such as clay bricks, masonry blocks such as concrete blocks, and other such masonry and ceramic products. This results in significant problems, since some masonry and ceramic products are more suitable to dry cutting than wet cutting and vice versa. Because of this, it is necessary for those working with masonry and ceramic products to have two different types of disc saw apparatus, one of which is suitable for dry cutting of products, and the other suitable for wet cutting of products. This results in significant additional and unnecessary expense.

There is therefore a need for a disc saw apparatus which addresses this problem. There is also a need for a workpiece platform which addresses the problem.

The present invention is directed towards providing such a workpiece platform, and the invention is also directed towards providing a disc saw apparatus comprising such a workpiece platform.

PCT Patent Application Specification No. WO 2018/147776 of Winterfjord discloses a workpiece platform according to the preamble of claim 1, and in particular a saw assembly comprising a workpiece platform for supporting a workpiece thereon, and a disc saw engageable with a workpiece for sawing therethrough. A main channel extends into the platform for receiving wet residue resulting from wet cutting of a workpiece. Apertures are formed in the channel for draining the wet residue therefrom. A channel cover, also of channel shape construction, is insertable into the main channel for receiving dry residue resulting from dry cutting of a workpiece.

According to the invention there is provided a workpiece platform for a disc saw apparatus, the platform defining a workpiece receiving surface, and having an elongated main channel extending into the platform from the workpiece receiving surface, and longitudinally along the platform in the direction of relative movement between the platform and a disc saw of the apparatus, an elongated residue collecting element defining opposite elongated first and second external faces and having an elongated first channel extending into the collecting element from the first external face and longitudinally along the collecting element, and an elongated second channel extending into the collecting element from the second external face thereof and longitudinally along the collecting element, the collecting element being selectively and alternately releasably engageable in the main channel in a first mode with the first channel configured to receive dry residue resulting from dry cutting of the workpiece, and a second mode with the second channel configured to receive wet residue resulting from wet cutting of the workpiece, and a communicating element configured to communicate the first channel with an extraction system for extracting the dry residue from the first channel when the collecting element is in the first mode.

In one embodiment of the invention the main channel is located in the platform, so that when the collecting element is located in the main channel in the first mode, the first channel is aligned with a plane defined by the disc saw through which the rotational axis of the disc saw extends perpendicularly.

Preferably, the first channel is aligned with a path of relative travel between the disc saw and the platform when the collecting element is located in the main channel in the first mode.

In another embodiment of the invention the first channel is adapted to accommodate a peripheral portion of the disc saw when the collecting element is located in the main channel in the first mode.

Advantageously, the second channel is aligned with the plane defined by the disc saw through which the rotational axis of the disc saw extends perpendicularly when the collecting element is located in the main channel in the second mode.

In another embodiment of the invention the second channel is aligned with the path of relative travel between the disc saw and the platform when the collecting element is located in the main channel in the second mode.

In another embodiment of the invention the second channel is adapted to accommodate a peripheral portion of the disc saw when the collecting element is located in the main channel in the second mode.

In another embodiment of the invention the main channel is defined by a base and a pair of spaced apart side walls. Preferably, the spaced apart side walls extend downwardly from the workpiece receiving surface, and advantageously, the side walls extend to the base.

In another embodiment of the invention a retaining means is provided for releasably retaining the collecting element in the main channel, and preferably, the retaining means comprises at least one magnet, and advantageously, the retaining means comprises a plurality of the magnets. In one embodiment of the invention each magnet is located in one of the main channel and the collecting element, and preferably, each magnet is located in the main channel. In one embodiment of the invention the magnets are spaced apart longitudinally along the main channel, and advantageously, the magnets are arranged in pairs, the magnets of each pair being transversely spaced apart from each other. Preferably, the pairs of the magnets are spaced apart longitudinally along the main channel.

Preferably, each magnet comprises a permanent magnet.

Advantageously, each magnet is secured to the base of the main channel.

In another embodiment of the invention the collecting element comprises a magnetically sensitive material.

In another embodiment of the invention the first external face defined by the collecting element is adapted to define a first plane, and the first external face of the collecting element when the collecting element is in the first mode is configured so that the first plane defined by the first external face of the collecting element substantially coincides with a main plane defined by the workpiece receiving surface of the platform.

In another embodiment of the invention the second external face defined by the collecting element is adapted to define a second plane, and the second external face of the collecting element when the collecting element is in the second mode is configured so that the second plane defined by the second external face substantially coincides with the main plane defined by the workpiece receiving surface of the platform.

In another embodiment of the invention the collecting element is of length greater than the length of the main channel, and preferably, the collecting element extends outwardly from the main channel adjacent one end thereof.

In another embodiment of the invention the communicating element comprises a housing defining a hollow interior region, and an inlet port to the hollow interior region, the inlet port to the hollow interior region of the housing of the communicating element being configured to communicate with an outlet port of the collecting element communicating with the first channel.

Preferably, the housing of the communicating element defines an outlet port communicating with the hollow interior region, the outlet port being adapted for connection to an extraction system, and preferably, the outlet port from the communicating element is adapted for releasable connecting to the extraction system.

In another embodiment of the invention the inlet port of the communicating element extends through a side wall of the housing of the communicating element.

In one embodiment of the invention the collecting element comprises a side wall, and the outlet port from the first channel is located in the side wall of the collecting element.

In another embodiment of the invention the collecting element in the first mode in the main channel is located with the outlet port from the first channel communicating with the inlet port to the communicating element.

In a further embodiment of the invention the inlet port of the communicating element communicates with the main channel.

Preferably, the communicating element is located in the platform adjacent the main channel.

In another embodiment of the invention the first channel is of U-shape, and preferably, comprises a base and a pair of spaced apart side walls extending from the base. Advantageously, the outlet port from the first channel is located in one of the side walls thereof.

In another embodiment of the invention a pair of first workpiece receiving walls extend inwardly towards each other from the respective side walls defining the first channel, the first workpiece receiving walls defining an elongated first slot extending substantially the length of the first channel and communicating with the first channel. Preferably, the elongated first slot defined by the first workpiece receiving walls is of width in a transverse direction, relative to the longitudinal direction of the collecting element, for accommodating a peripheral portion of the disc saw between the first workpiece receiving walls.

In another embodiment of the invention the first workpiece receiving walls define the first external face of the collecting element.

Preferably, the slot defined by the first workpiece receiving walls extends substantially parallel to the first channel.

In another embodiment of the invention a pair of elongated spaced apart brushes extend longitudinally along the first channel for engaging a peripheral portion of the disc saw.

In another embodiment of the invention the second channel is of U-shape, and preferably, comprises a base and a pair of spaced apart side walls extending from the base.

In another embodiment of the invention a pair of second workpiece receiving walls extend inwardly towards each other from the respective side walls defining the second channel, the second workpiece receiving walls defining an elongated second slot extending substantially the length of the second channel and communicating with the second channel. Preferably, the elongated second slot defined by the second workpiece receiving walls is of width in a transverse direction, relative to the longitudinal direction of the collecting element, for accommodating a peripheral portion of the disc saw between the second workpiece receiving walls.

In another embodiment of the invention the second workpiece receiving walls define the second external face of the collecting element.

Preferably, the bases of the first and second channels are formed by a common base.

In one embodiment of the invention the side walls of the respective first and second channels extend from the common base in respective opposite directions.

In another embodiment of the invention a datum element is provided on the platform for aligning the workpiece with the disc saw. Preferably, the datum element extends on the platform substantially parallel to the main channel. Advantageously, the datum element comprises an elongated datum bar extending parallel to the main channel.

In another embodiment of the invention the datum element is slideable along the platform in a direction transversely of the main channel.

In another embodiment of the invention a guide element is provided for guiding the datum element transversely relative to the main channel. Preferably, the guide element is configured for engaging the workpiece for aligning the workpiece with the disc saw.

In one embodiment of the invention a graduated measuring scale is provided extending transversely of the platform, for facilitating positioning of the datum element relative to the main channel.

Additionally, the invention provides a disc saw apparatus comprising the workpiece platform according to the invention.

In one embodiment of the invention one of the workpiece platform and the disc saw is moveable relative to the other one of the workpiece platform and the disc saw in a longitudinal direction parallel to the main channel formed in the workpiece platform.

In another embodiment of the invention the workpiece platform is moveable relative to the disc saw, and preferably, the workpiece platform is moveable relative to the disc saw in a direction perpendicular to the rotational axis of the disc saw.

The advantages of the invention are many. A particularly important advantage of the invention is that it provides a workpiece platform which is suitable for supporting a workpiece being cut by a disc saw in a disc saw apparatus by both dry cutting and wet cutting. Accordingly, a disc saw apparatus comprising the workpiece platform according to the invention is suitable for both dry cutting and wet cutting of workpieces. To change from wet cutting to dry cutting all that is required is to invert the collecting element in the main channel of the workpiece platform, and for dry cutting to connect the communicating element to a suitable extraction system, for extracting dust residue from dry cutting from the first channel of the collecting element. For example, when it is desired to use the workpiece platform for dry cutting, the collecting element is located in the main channel in the first mode with the first channel facing upwardly, and when it is desired to use the workpiece platform for supporting a workpiece during wet cutting, the collecting element is removed from the main channel and inverted and reengaged in the main channel in the second mode with the second channel facing upwardly.

The advantage of providing magnets, and in particular, permanent magnets for releasably retaining the collecting element in the main channel is that while the permanent magnets tightly secure the collecting element in the main channel during use of the disc saw apparatus, the collecting element can be readily easily disengaged by hand from the magnets for change over from dry to wet cutting and vice-versa.

The invention will be more clearly understood from the following description of a preferred embodiment thereof which is given by way of example only with reference to the accompanying drawings, in which:
Fig. 1 is a perspective view of a disc saw apparatus according to the invention comprising a workpiece platform also according to the invention,
Fig. 2 is a cross-sectional side elevational view of the disc saw apparatus of Fig. 1 comprising the workpiece platform, also of Fig. 1,

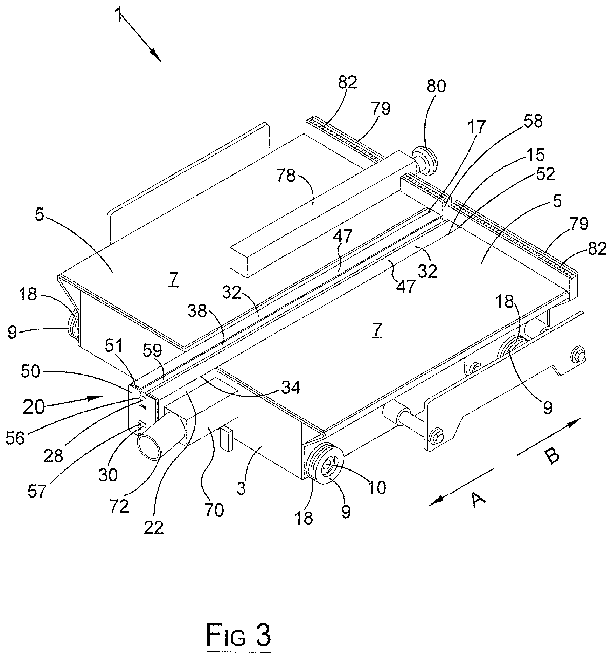

Fig. 3 is a perspective view of the workpiece platform of the disc saw apparatus of Fig. 1,

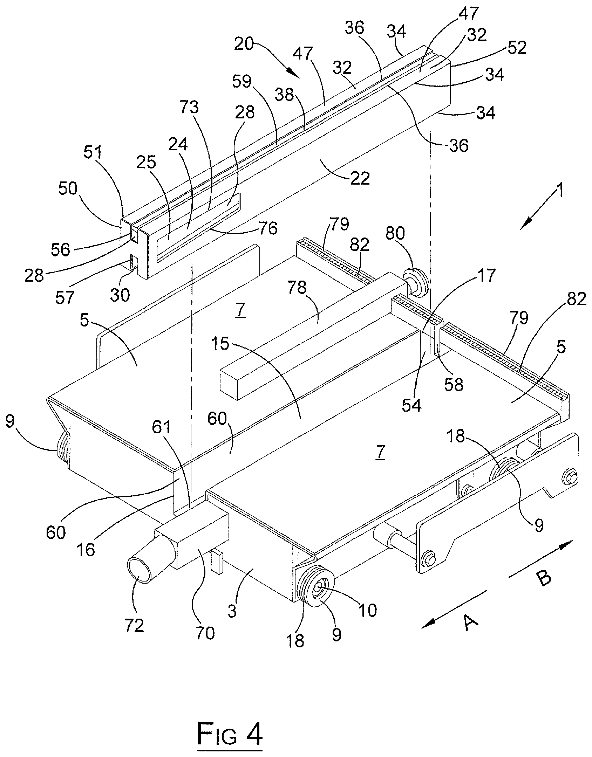

Fig. 4 is a partly exploded perspective view of the workpiece platform of Fig. 3,

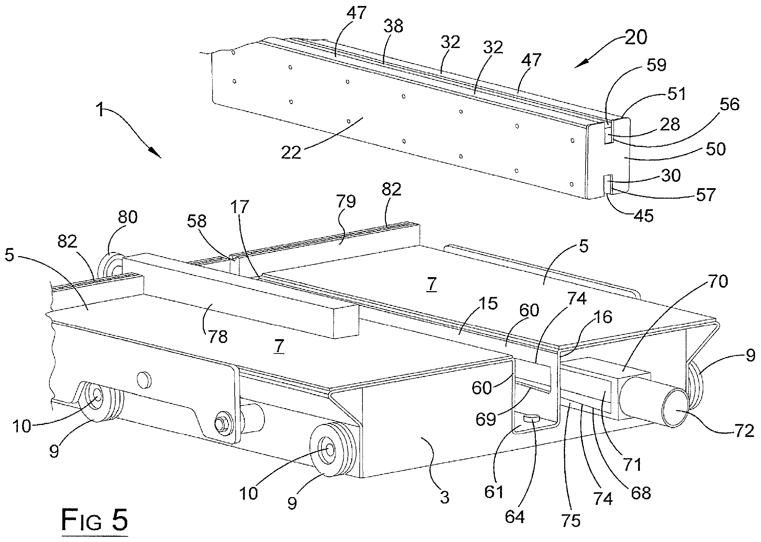

Fig. 5 is another partly exploded perspective view of the workpiece platform of Fig. 3,
Fig. 6 is an end elevational view of the workpiece platform of Fig. 3 illustrating the workpiece platform relative to a disc saw of the disc saw apparatus of Fig. 1,
Fig. 7 is a side elevational view of the workpiece platform of Fig. 3,

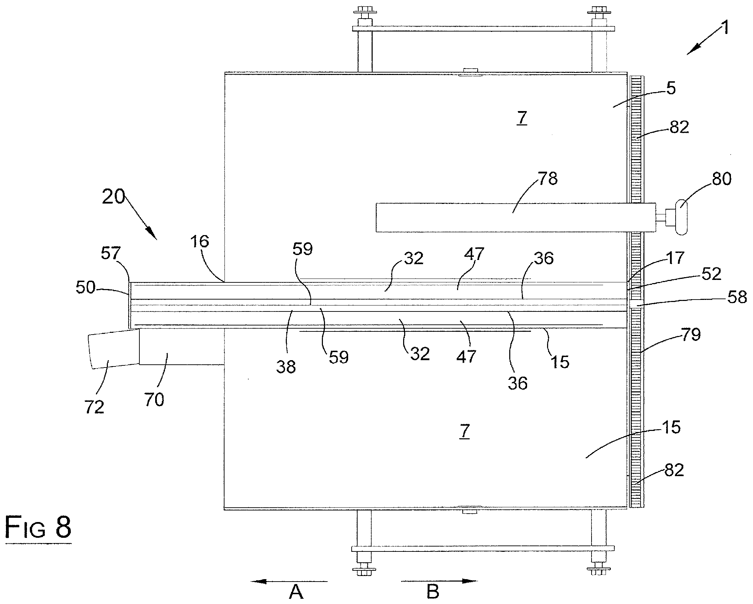

Fig. 8 is a top plan view of the workpiece platform of Fig. 3,

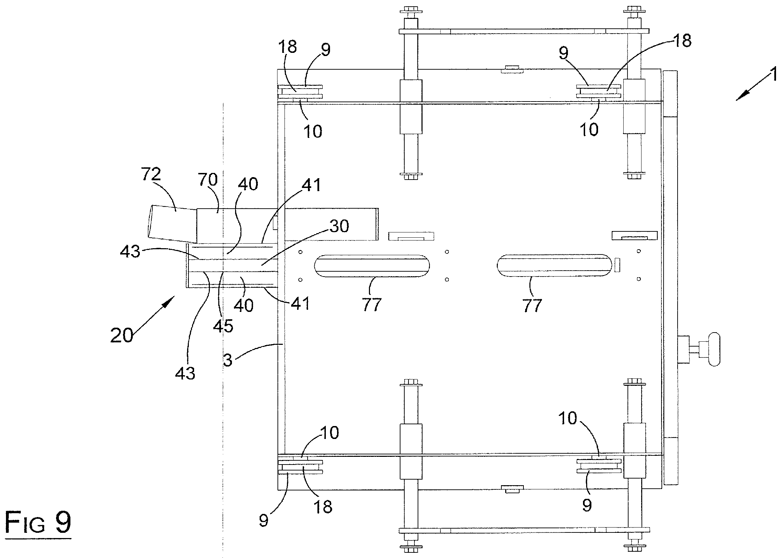

Fig. 9 is an underneath plan view of the workpiece platform of Fig. 3,

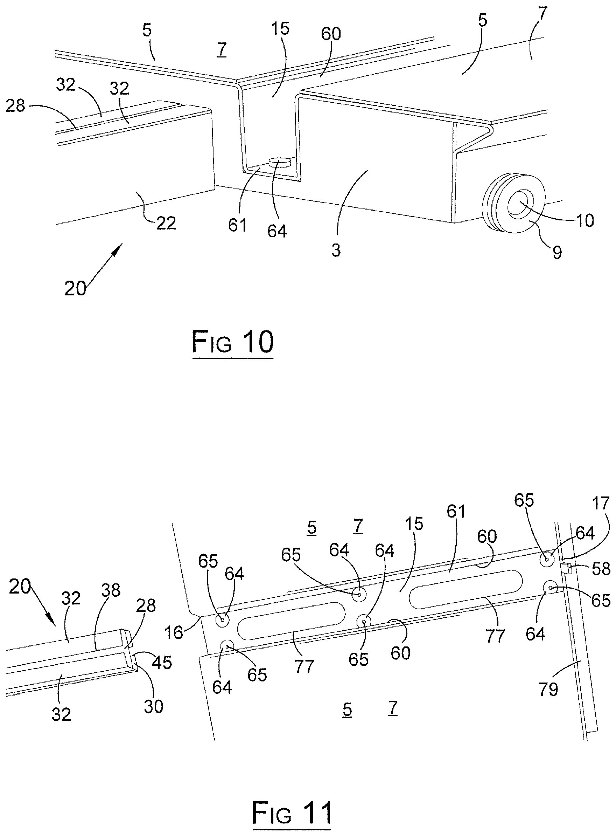

Fig. 10 is an exploded perspective view of a detail of the workpiece platform of Fig. 3,
Fig. 11 is an exploded perspective view of more of the detail of Fig. 10 of the workpiece platform of Fig. 3,

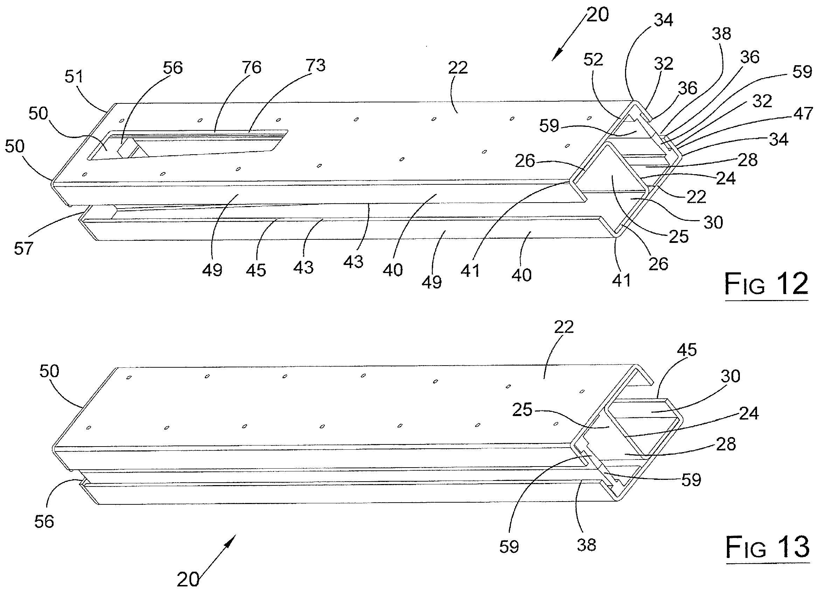

Fig. 12 is a perspective view of a portion of the workpiece platform of Fig. 3,
Fig. 13 is another perspective view of the portion of Fig. 12 of the workpiece platform of Fig. 3,

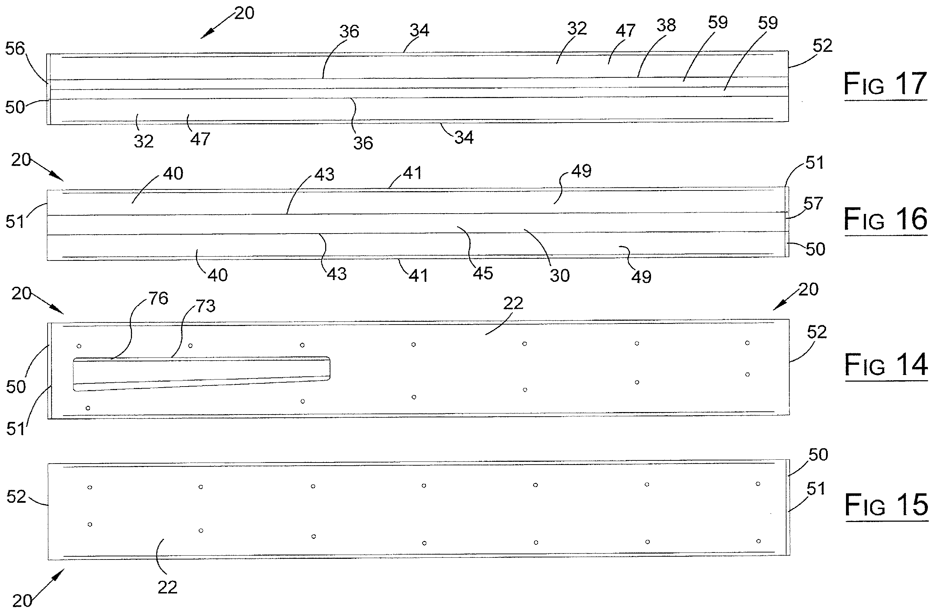

Fig. 14 is a side elevational view of the portion of Fig. 12 of the workpiece platform of Fig. 3,
Fig. 15 is a side elevational view of the portion of Fig. 12 from the other side thereof of the workpiece platform of Fig. 3,
Fig. 16 is a plan view of the portion of Fig. 12 of the workpiece platform of Fig. 3,
Fig. 17 is another plan view of the portion of Fig. 12 of the workpiece platform of Fig. 3,

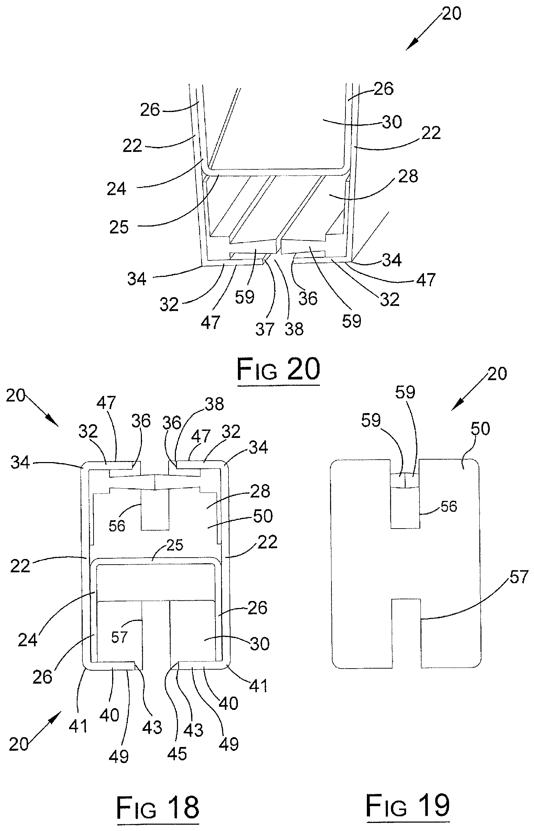

Fig. 18 is an end elevational view of the portion of Fig. 12 from one end thereof of the workpiece platform of Fig. 3,
Fig. 19 is an end elevational view from the other end of the portion of Fig. 12 of the workpiece platform of Fig. 3, and
Fig. 20 is a perspective view of an end detail of the portion of Fig. 12 of the workpiece platform of Fig. 3.

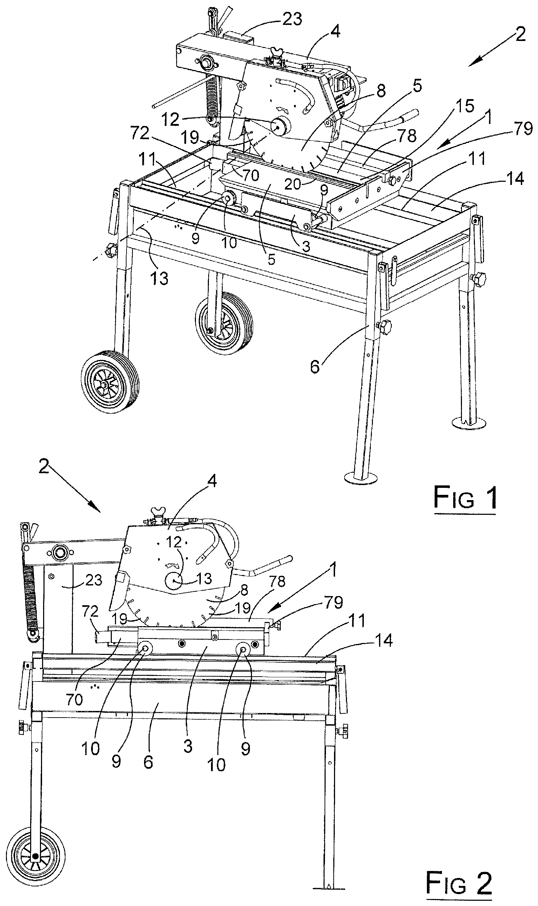

Referring to the drawings there is illustrated a workpiece platform according to the invention indicated generally by the reference numeral 1 for supporting a workpiece, for example, a masonry block or brick in a disc saw apparatus 2, which is also according to the invention when comprising the workpiece platform 1. The disc saw apparatus 2, which is illustrated in Figs. 1 and 2, comprises a disc saw 8 mounted fast on a driven shaft 12 rotatably mounted in a housing 4. The housing 4 is supported on an upstanding support bracket 23 extending upwardly from a ground engaging support framework 6. A basin type bed 14 is mounted on the ground engaging support framework 6 and below the housing 4 and spaced apart downwardly from the housing 4. The workpiece platform 1 is located in the bed 14 with the driven shaft 12, on which the disc saw 8 is mounted fast, located at a level above the level of the workpiece platform 1. A drive motor (not shown), typically, an electrically powered motor is provided in the housing 4 for driving the driven shaft 12, on which the disc saw 8 is mounted fast. In such disc saw apparatus as the disc saw apparatus 2, either the disc saw 8 is moveable relative to the workpiece platform 1, or the workpiece platform 1 is moveable relative to the disc saw 8 for cutting a workpiece on the workpiece platform 1. The general constructions of such disc saw apparatus as the disc saw apparatus 2 will be well known to those skilled in the art, and further description should not be required.

In this embodiment of the invention the disc saw 8 and the housing 4 are fixed relative to the ground engaging support framework 6, and the workpiece platform 1 is moveable in the bed 14 relative to the disc saw 8 in the directions of the arrows A and B. Although, it will be appreciated that the workpiece platform 1 may be fixed relative to the bed 14, and the housing 4 and the disc saw 8 would be moveable relative to the workpiece platform 1.

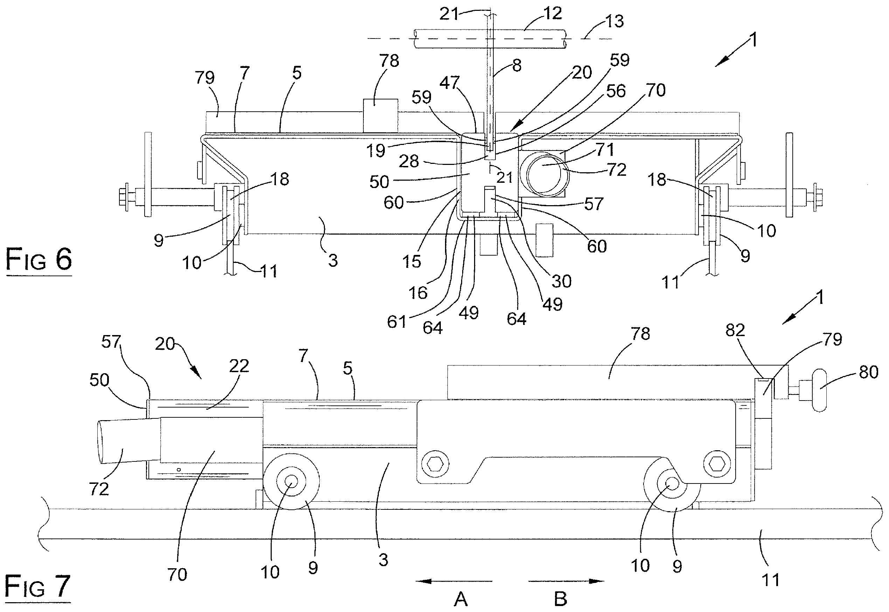

Turning now to the workpiece platform 1, the workpiece platform 1 comprises a framework 3 which carries a pair of workpiece receiving panels 5 which together define a workpiece receiving surface 7 for receiving a workpiece (not shown) to be cut by the disc saw 8. Four guide wheels 9 are rotatably carried on corresponding shafts 10 extending from the framework 3 of the workpiece platform 1. The guide wheels 9 are adapted to engage a guide means provided by a pair of spaced apart parallel guide tracks 11 located in the bed 14 of the disc saw apparatus 2 for guiding the workpiece platform 1 in the directions of the arrows A and B for in turn guiding the workpiece platform 1 relative to the disc saw 8 of the disc saw apparatus 2, see Figs. 2, 6 and 7. Circumferentially extending guide grooves 18 extending radially into the guide wheels 9 engage the corresponding guide tracks 11 for guiding the workpiece platform 1 along the guide tracks 11. The guide tracks 11 of the disc saw apparatus 2 extend parallel to a plane 21 defined by the disc saw 8 and in which the disc saw 8 is rotatably driven by the driven shaft 12. The driven shaft 12 defines a rotational axis 13 about which the disc saw 8 rotates, and which extends substantially perpendicularly through the rotational plane 21 defined by the disc saw 8. This aspect of a workpiece platform which is moveable relative to a disc saw of a disc saw apparatus will be well known to those skilled in the art.

An elongated main channel 15 is formed in the workpiece platform 1 between the workpiece receiving panels 5, and extends into the workpiece platform 1 from the workpiece receiving surface 7, and extends longitudinally along the workpiece platform 1 from a first end 16 to a second end 17. The main channel 15 extends parallel to the direction of motion of the workpiece platform 1 on the guide tracks 11 of the disc saw apparatus 2, in other words, the main channel 15 of the workpiece platform 1 extends parallel to the direction of motion of the workpiece platform 1 relative to the disc saw 8 in the directions of the arrows A and B. In this embodiment of the invention the main channel 15 is aligned with the disc saw 8 and the rotational plane 21 defined by the disc saw 8, and is also configured to receive a peripheral portion 19 of the disc saw 8 into the main channel 15 during movement of the workpiece platform 1 relative to the disc saw 8. Although, in some embodiments of the invention it is envisaged that the main channel 15 may not be configured to receive any portion of the disc saw 8 therein, however, the main channel 15 would be aligned with the disc saw 8 and would be aligned with the path of travel of the disc saw 8 relative to the workpiece platform 1.

A residue collecting element indicated generally by the reference numeral 20 is configured for releasable mounting within the main channel 15 in two modes, namely, a first mode and a second mode as will be described below. The collecting element 20 comprises a pair of spaced apart side walls 22 which are joined by a U-shaped member 24. The U-shaped member 24 comprises a base 25 and a pair of opposite spaced apart side walls 26. The side walls 26 of the U-shaped member 24 abut the side walls 22 of the collecting element 20 and are secured thereto by, for example, welding, for in turn retaining the side walls 22 of the collecting element 20 spaced apart from each other and secured relative to each other. The base 25 of the U-shaped member 24 defines a common base of a first channel 28 and a second channel 30 formed in the collecting element 20 for collecting residue from sawing of the workpiece supported on the workpiece receiving panels 5. The first channel 28 is defined by the base 25 of the U-shaped member 24 and the side walls 22 of the collecting element 20. The second channel 30 is defined by the base 25 of the U-shaped member 24 and the side walls 26 thereof. As will be described in more detail below the first channel 28 is configured for receiving and collecting dry residue from dry cutting of a workpiece supported on the workpiece platform 1 when the collecting element 20 is located in the main channel 15 in the first mode with the first channel 28 facing upwardly, and the second channel 30 is configured for receiving and collecting wet residue from wet cutting of a workpiece supported on the workpiece platform 1 when the collecting element 20 is located in the main channel 15 in the second mode with the second channel 30 facing upwardly.

First workpiece receiving walls 32 extend longitudinally along the side walls 22 of the collecting element 20 along edges 34 of the side walls 22, and extend inwardly from the edges 34 of the side walls 22 towards each other. The first workpiece receiving walls 32 terminate at 36 to define an elongated longitudinally extending elongated first slot 38 extending longitudinally along the collecting element 20 and communicating with the first channel 28. A pair of second workpiece receiving walls 40 extend longitudinally along respective edges 41 of the side walls 22 of the collecting element 20, and extend inwardly from the edges 41 towards each other. The second workpiece receiving walls 40 terminate at 43 to define an elongated second slot 45 extending longitudinally along the collecting element 20 and communicating with the second channel 30. The first and second slots 38 and 45 of the collecting element 20 are configured to accommodate the peripheral portion 19 of the disc saw 8 into the corresponding one of the first and second channels 28 and 30 during cutting of the workpiece when the collecting element 20 is located in the main channel 15 in the first and second modes, respectively, The first workpiece receiving walls 32 define respective first workpiece receiving faces 47, while the second workpiece receiving walls 40 define second workpiece receiving faces 49.

The collecting element 20 is releasably securable in the main channel 15 in the two modes, namely, in the first mode and in the second mode. In the first mode, the collecting element 20 is releasably secured in the main channel 15 with the first channel 28 and the first slot 38 communicating with the first channel 28 facing upwardly and aligned with the rotational plane 21 of the disc saw 8. In the second mode, the collecting element 20 is releasably secured in the main channel 15 with the second channel 30 and the second slot 45 communicating with the second channel 30 facing upwardly and aligned with the rotational plane 21 of the disc saw 8.

In the first mode of operation when the collecting element 20 is located in the main channel 15 with the first channel 28 and the first slot 38 facing upwardly, the first channel is adapted for receiving dry residue during dry cutting of a workpiece by the disc saw 8. When the collecting element 20 is located in the main channel 15 in the first mode, the first workpiece receiving faces 47 of the first workpiece receiving walls 32 define a plane which coincides with a plane defined by the workpiece receiving surfaces 7 of the workpiece receiving panels 5 so that with the collecting element 20 secured in the main channel 15 in the first mode, the workpiece receiving panels 5 and the first workpiece receiving walls 32 are configured to support a workpiece thereon.

In the second mode of operation of the collecting element 20, the collecting element 20 is inverted with the second channel 30 and the second slot 45 facing upwardly for receiving wet residue during wet cutting of a workpiece by the disc saw 8. When the collecting element 20 is secured in the main channel 15 in the second mode, the second workpiece receiving faces 49 of the second workpiece receiving walls 40 define a plane which coincides with the plane defined by the workpiece receiving surfaces 7 of the workpiece receiving panels 5, so that the second workpiece receiving walls 40 and the workpiece receiving panels 5 together support a workpiece when the collecting element 20 is secured in the main channel 15 in the second mode.

An end wall 50 secured to the side walls 22 and to the first and second workpiece receiving walls 32 and 40, closes the first and second channels 28 and 30 adjacent an end 51 thereof. The other end 52 of the first and second channels 28 and 30 are open, but when the collecting element 20 is secured in the main channel 15 in both the first and second modes, an end wall 54 of the workpiece platform 1 closing the end 17 of the main channel 15 closes the first and second channels 28 and 30 of the collecting element 20.

A first end slot 56 and a second end slot 57 extend into the end wall 50 of the collecting element 20, and are of width similar to the width of the first and second slots 38 and 45 and are aligned with the corresponding one of the first and second slots 38 and 45, respectively, for accommodating the peripheral portion 19 of the disc saw 8 as the workpiece platform 1 is being moved in the direction of the arrows A and B relative to the disc saw 8. A third end slot 58 extends downwardly into the end wall 54 of the workpiece platform 1 adjacent the second end 17 of the main channel 15 for also accommodating the disc saw 8 into the first and second channels 28 and 30 of the collecting element 20 when the collecting element 20 is located in the main channel 15 in the respective first and second modes.

A pair of elongated brush elements 59 are located extending parallel to each other in the first channel 28 adjacent the first workpiece receiving walls 32 and extend towards each other adjacent the first slot 38 to engage the disc saw 8 for brushing dry residue from the disc saw 8 during dry cutting of a workpiece so that the dry residue is collected in the first channel 28.

Returning now to the main channel 15, the main channel 15 is defined between a pair of spaced apart parallel side walls 60 extending downwardly into the workpiece platform 1 from the respective workpiece receiving panels 5 and extending longitudinally in the direction of motion of the platform 1 in the directions of the arrows A and B. The side walls 60 extend downwardly to a base 61 which also extends longitudinally in the platform 1 and defines with the side walls 60 the main channel 15. The first end 16 of the main channel 15 is open for accommodating the collecting element 20 extending therethrough as will be described below.

A retaining means for releasably retaining the collecting element 20 in the main channel 15 in the first and second modes, in this embodiment of the invention comprises a plurality of permanent magnets 64 located on the base 61 in the main channel 15. The magnets 64 are arranged transversely spaced apart in pairs, and the pairs of the magnets 64 are equi-spaced apart longitudinally along the base 61 of the main channel 15 for engaging the adjacent ones of the first and second workpiece receiving walls 32 and 40 of the collecting element 20. The magnets 64 are secured to the base 61 of the main channel 15 by screws 65. The collecting element 20 is constructed from a magnetically sensitive material, which in this embodiment of the invention comprises steel in order to interact with the magnets 64 for releasably securing the collecting element 20 in the main channel 15 in the first and second modes. The power of the permanent magnets 64 is such as to secure and retain the collecting element 20 in the respective first and second modes in the main channel 15, but is also of such strength as to permit the collecting element 20 to be manually disengaged from the main channel 15, in order that the collecting element 20 is removable from the main channel 15 for inverting the collecting element 20 between the first and second modes.

The collecting element 20 is longer than the main channel 15, and extends from the main channel 15 through the first end 16 thereof, in order to facilitate gripping of the collecting element 20 for inserting the collecting element 20 into the main channel 15 and for removing the collecting element 20 therefrom for facilitating inverting the collecting element 20 to change between the first and second modes.

A communicating element for communicating the first channel 28 of the collecting element 20 with a vacuum based extraction system (not shown) for extracting the dry residue from the first channel 28 comprises a communicating housing 70 which is located in the workpiece platform 1 adjacent the main channel 15 and adjacent the first end 16 thereof. The communicating housing extends outwardly from the workpiece platform 1 adjacent the first end 16 of the main channel 15. The communicating housing 70 defines a hollow interior region 71. An outlet port 72 extending from the communicating housing 70 communicates with the hollow interior region 71, and is configured for releasable securing to a hose or other suitable conduit of the extraction system (not shown). An inlet port 68 formed by an inlet opening 74 extending through a side wall 75 of the communicating housing 70 communicates with an outlet port 73 from the first channel 28 of the collecting element 20 partly through a communicating opening 69 in one of the side walls 60 of the main channel 15 and partly directly with the outlet port 73. The outlet port 73 from the first channel 28 is formed by an outlet opening 76 formed through a portion of one of the side walls 22 of the collecting element 20 forming the first channel 28. The outlet port 73 from the first channel 28 of the collecting element 20 when the collecting element 20 is secured in the main channel 15 in the first mode is aligned with the inlet port 69 to the hollow interior region 71 of the communicating housing 70. The part of the outlet opening 76 of the outlet port 73 from the first channel 28, which is located within the main channel 15, when the collecting element 20 is secured in the first mode in the main channel 15, communicates with the inlet opening 74 of the inlet port 68 of the communicating housing 70 through the communicating opening 69 in the corresponding side wall 60 of the main channel 15. The remainder of the outlet opening 76 of the outlet port 73 from the first channel 28 communicates directly with the inlet opening 74 of the inlet port 68 of the communication housing 70.

In this embodiment of the invention the outlet opening 76 of the outlet port 73 from the first channel 28 in the side wall 22 of the collecting element 20 is of tapering shape and tapers in a direction from the end 51 of the collecting element 20 towards the other end 52 thereof. The inlet opening 74 of the inlet port 68 in the side wall 75 of the communicating housing 70 is similarly and correspondingly shaped to that of the outlet opening 76 of the outlet port 73 from the first channel 28. The communicating opening 69 in the corresponding side wall 60 of the main channel 15 is also tapered correspondingly to that of the outlet opening 76 of the outlet port 73 from the first channel 28, so that the outlet opening 76 of the outlet port 73 of the first channel 28 is fully alignable with the inlet opening 74 of the inlet port 68 to the communicating housing 70 when the collecting element 20 is located and secured in the main channel 15 in the first mode.

The extraction system may be any suitable extraction system, for example, a vacuum extraction system which draws air from the hollow interior region 71 of the communicating housing 70, and in turn from the first channel 28 for drawing the dry residue in the first channel 28 therefrom. A typical vacuum system, would be of the type suitable for subsequently separating the dry residue from the air and collecting the dry residue in a residue collecting container for subsequent disposal.

Drain slots 77 in the base 61 of the main channel 15, drain any liquid from the wet cutting of a workpiece, which may run into the main channel 15 from the main channel 15, into the bed 14 within which the workpiece platform 1 is located.

A datum element for aligning the workpiece on the workpiece platform 1 with the disc saw 8 comprises an elongated datum bar 78 located on the workpiece platform 1. The datum bar 78 is slideably mounted on a guide element comprising a guide bar 79 extending upwardly from the workpiece platform 1 adjacent the second end 17 of the main channel 15, and extending transversely of the main channel 15. The datum bar 78 extends perpendicularly from the guide bar 79 and parallel to the main channel 15 for setting the distance of a line along which the workpiece is to be cut by the disc saw 8 from an end of the workpiece when the end of the workpiece is abutting the datum bar 78. The guide bar 79 acts as a transversely extending alignment bar for abutting and locating the workpiece on the workpiece platform 1 with the line along which the workpiece is to be cut aligned with the rotational plane 21 of the disc saw 8, as the workpiece platform 1 with the workpiece aligned thereon is being urged in the direction of the arrow A, for in turn urging the workpiece into engagement with the disc saw 8. A graduated measuring scale 82 extends along the guide bar 79 for facilitating setting of the datum bar 78 at the desired distance from the rotational plane 21, and in turn from the line of action of the disc saw 8 as the workpiece platform 1 is being urged in the direction of the arrow A relative to the disc saw 8. A clamping screw 80 extending through a threaded bore (not shown) in the datum bar 78 is engageable with the guide bar 79 for securing the datum bar 78 at a desired position on the workpiece platform 1.

In use, when it is desired to operate the disc saw apparatus 2 and the workpiece platform 1 in a dry cutting mode, for cutting, for example, a masonry brick or block into two portions, the collecting element 20 is located and secured in the main channel 15 in the first mode by the magnets 64 with the first channel 28 and the first slot 38 facing upwardly, so that as the workpiece platform 1 and in turn the workpiece on the platform 1 is urged in the direction of the arrow A into engagement with the disc saw 8, the peripheral portion 19 of the disc saw 8 extends into the first channel 28 through the first slot 38. The datum bar 78 is set at the desired position, so that when the workpiece is abutting the datum bar 78, the line along which the workpiece is to be cut by the disc saw 8 is aligned with the rotational plane 21 of the disc saw 8. The workpiece is then placed on the workpiece platform 1 and held by hand with the workpiece abutting the datum bar 78 and the guide bar 79 so that the line along which the workpiece is to be cut by the disc saw 8 is aligned with the rotational plane 21 of the disc saw 8.

With the disc saw 8 driven in rotation and the workpiece positioned on the workpiece platform 1 abutting against the datum bar 78 and the guide bar 79, the workpiece platform 1 with the workpiece located thereon is urged in the direction of the arrow A for urging the workpiece into engagement with the disc saw 8, so that the disc saw 8 cuts the workpiece along the line along which the workpiece is to be cut.

During dry cutting of the workpiece, residue, typically, dry residue dust is directed by the cutting action of the disc saw into the first channel 28, and residue dust on the side faces of the disc saw is wiped therefrom by the brushes 59 into the first channel 28. The vacuum system (not shown) coupled to the communicating housing 70 draws air and the dust from the first channel 28 through the communicating housing 70. The residue dust is subsequently separated from the air and collected in a container for subsequent disposal. The action of the vacuum drawing air into the first channel 28 through the first slot 38 also draws the residue dust as the workpiece is being cut by the disc saw 8 into the first channel 28, from which it is drawn through the communicating housing 70.

When it is desired to operate the apparatus and the workpiece platform 1 to wet cut a workpiece, such as a masonry block or brick, the collecting element 20 is located and secured in the main channel 15 by the magnets 64 in the second mode with the second channel 30 and the second slot 45 extending upwardly, so that the second slot 45 accommodates a peripheral portion 19 of the disc saw 8 into the second channel 20. The datum bar 78 is set at the desired position, so that when the workpiece is abutting the datum bar 78, the line along which the workpiece is to be cut by the disc saw 8 is aligned with the rotational plane 21 of the disc saw 8. The workpiece is then placed on the workpiece platform 1 and held by hand with the workpiece abutting the datum bar 78 and the guide bar 79 so that the line along which the workpiece is to be cut by the disc saw 8 is aligned with the rotational plane 21 of the disc saw 8.

With the disc saw 8 driven in rotation and the workpiece positioned on the platform 1 abutting against the datum bar 78 and the guide bar 79, the workpiece platform 1 with the workpiece located thereon is urged in the direction of the arrow A for urging the workpiece into engagement with the disc saw 8, so that the disc saw 8 cuts the workpiece along the line along which the workpiece is to be cut.

During cutting of the workpiece, the wet residue and the cutting fluid is collected in the second channel 30, and runs through the second channel 30, and in turn through the second end slot 57 in the end wall 50 of the collecting element 20, and in turn into the bed 14, within which the workpiece platform 1 is located and moveable on the guide tracks 11 therein. The bed 14, as will be understood by those skilled in the art forms a sump, in which the cutting fluid with the cutting residue entrained therein is collected for subsequent filtering, in order to separate the cutting residue therefrom for disposal, and the filtered cutting fluid is recirculated.

While the collecting element has been described as being of a specific construction, the collecting element may be of any other suitable or desired construction. For example, while it is important that the side walls 22 of the collecting element be joined by a base which preferably forms a common base of the first and second channels 28 and 30, the base 25 may be secured in any suitable manner to the side walls 22, without the need for the U-shaped member 24. A base extending between the side walls 22 without the side walls 26 of the U-shaped member could be provided and the base 25 would be directly secured to the side walls 22, for example, by continuous welding. Needless to say, each of the first and second channels may be provided with separate bases.

It will also be appreciated that any other suitable communicating element besides the communicating housing described with reference to this embodiment of the invention may be provided for collecting the dry residue from the first channel of the collecting element.

While the workpiece platform has been described as comprising a pair of workpiece receiving panels which define workpiece receiving surfaces for receiving the workpiece, any other suitable workpiece receiving means for receiving the workpiece on the workpiece platform may be provided.

Needless to say, any other suitable guide means for guiding the workpiece platform relative to the disc saw of the disc saw apparatus may be use beside the rotatably mounted wheels 9 which are rollably engageable with the respective spaced apart parallel guide tracks. For example, the guide tracks may be provided on the workpiece platform which would be engageable with suitable roller bearings or wheels which would be located secured in the bed of the disc saw apparatus.

It will also of course be appreciated that in other embodiments of the invention the workpiece platform may be stationary, while the disc saw would be moveable relative to the workpiece platform.

While the workpiece platform has been described in a disc saw apparatus of a particular construction, it will be readily apparent to those skilled in the art that the workpiece platform may be incorporated into any other suitable disc saw apparatus. It will also of course be appreciated that the workpiece platform according to the invention may be incorporated into a disc saw apparatus in which the workpiece platform is stationary, and the disc saw is moveable relative to the workpiece platform for cutting a workpiece on the workpiece platform.

## Claims

1. A workpiece platform for a disc saw apparatus, the platform (1) defining a workpiece receiving surface (7), and having an elongated main channel (15) extending into the platform (1) from the workpiece receiving surface (7), and longitudinally along the platform (1) in the direction of relative movement between the platform (1) and a disc saw (8) of the apparatus (2), an elongated residue collecting element (20) defining opposite elongated first and second external faces (47, 49) and having an elongated first channel (28) extending into the collecting element (20) from the first external face (47) and longitudinally along the collecting element (20), the collecting element (20) being releasably engageable in the main channel (15) in a first mode with the first channel (28) configured to receive dry residue resulting from dry cutting of the workpiece, and a communicating element (70) configured to communicate the first channel (28) with an extraction system for extracting the dry residue from the first channel (28) when the collecting element (20) is in the first mode, **characterised in that** an elongated second channel (30) extends into the collecting element (20) from the second external face (49) thereof and longitudinally along the collecting element (20), and the collecting element (20) is selectively and alternately releasably engageable in the main channel (15) in the first mode and in a second mode with the second channel (30) configured to receive wet residue resulting from wet cutting of the workpiece.

2. A platform as claimed in Claim 1 **characterised in that** the main channel (15) is located in the platform (1), so that when the collecting element (20) is located in the main channel (15) in the first mode, the first channel (28) is aligned with a plane defined by the disc saw (8) through which the rotational axis (13) of the disc saw (5) extends perpendicularly.

3. A platform as claimed in Claim 1 or 2 **characterised in that** the first channel (28) is aligned with a path of relative travel between the disc saw (5) and the platform (1) when the collecting element (20) is located in the main channel (15) in the first mode.

4. A platform as claimed in any preceding claim **characterised in that** the second channel (30) is aligned with the plane defined by the disc saw (5) through which the rotational axis (13) of the disc saw extends perpendicularly when the collecting element (20) is located in the main channel (15) in the second mode.

5. A platform as claimed in any preceding claim **characterised in that** the second channel (30) is aligned with the path of relative travel between the disc saw (5) and the platform (1) when the collecting element (20) is located in the main channel (15) in the second mode.

6. A platform as claimed in any preceding claim **characterised in that** the first channel (28) is adapted to accommodate a peripheral portion of the disc saw (5) when the collecting element (20) is located in the main channel (15) in the first mode, and the second channel (30) is adapted to accommodate a peripheral portion of the disc saw (5) when the collecting element (20) is located in the main channel (15) in the second mode.

7. A platform as claimed in any preceding claim **characterised in that** a retaining means (64) is provided for releasably retaining the collecting element (20) in the main channel (15), the retaining means comprising at least one magnet (64).

8. A platform as claimed in any preceding claim **characterised in that** the first external face (47) defined by the collecting element (20) is adapted to define a first plane, and the first external face (47) of the collecting element (20) when the collecting element is in the first mode is configured so that the first plane defined by the first external face (47) of the collecting element substantially coincides with a main plane defined by the workpiece receiving surface (7) of the platform (1).

9. A platform as claimed in any preceding claim **characterised in that** the second external face (49) defined by the collecting element (20) is adapted to define a second plane, and the second external face (49) of the collecting element (20) when the collecting element is in the second mode is configured so that the second plane defined by the second external face (49) substantially coincides with the main plane defined by the workpiece receiving surface (7) of the platform (1).

10. A platform as claimed in any preceding claim **characterised in that** the communicating element (70) comprises a housing (70) defining a hollow interior region (71), and an inlet port (68) to the hollow interior region (71), the inlet port (68) to the hollow interior region (71) of the housing (70) of the communicating element being configured to communicate with an outlet port (73) of the collecting element (20) communicating with the first channel (28).

11. A platform as claimed in Claim 10 **characterised in that** the inlet port (68) to the communicating element (70) extends through a side wall (75) of the housing (70) of the communicating element (70), and the collecting element (20) in the first mode in the main channel (15) is located with the outlet port (73) from the first channel (28) communicating with the inlet port (68) to the communicating element (70).

12. A platform as claimed in any preceding claim **characterised in that** the first channel (28) comprises a base (25) and a pair of spaced apart side walls (22) extending from the base (25), and a pair of first workpiece receiving walls (32) extend inwardly towards each other from the respective side walls (22) defining the first channel (28), the first workpiece receiving walls (32) defining an elongated first slot (38) extending substantially the length of the first channel (28) and communicating with the first channel (28).

13. A platform as claimed in any preceding claim **characterised in that** the second channel (30) comprises a base (25) and a pair of spaced apart side walls (22, 26) extending from the base (25), and a pair of second workpiece receiving walls (40) extend inwardly towards each other from the respective side walls (22) defining the second channel (30), the second workpiece receiving walls (40) defining an elongated second slot (45) extending substantially the length of the second channel (30) and communicating with the second channel (30).

14. A disc saw apparatus comprising the workpiece platform (1) as claimed in any of Claims 1 to 13.

## Patentansprüche

1. Werkstückplattform für eine Scheibensägevorrichtung, wobei die Plattform (1) eine Werkstückaufnahmefläche (7) definiert und einen länglichen Hauptkanal (15), der sich von der Werkstückaufnahmefläche (7) in die Plattform (1) und längs entlang der Plattform (1) in der Richtung einer relativen Bewegung zwischen der Plattform (1) und einer Scheibensäge (8) der Vorrichtung (2) erstreckt, ein längliches Rückstandssammelelement (20), das gegenüberliegende längliche erste und zweite Außenflächen (47, 49) definiert und einen länglichen ersten Kanal (28) aufweist, der sich von der ersten Außenfläche (47) in das Sammelelement (20) und längs entlang des Sammelelements (20) erstreckt, wobei das Sammelelement (20) in einem ersten Modus lösbar mit dem Hauptkanal (15) in Eingriff bringbar ist, wobei der erste Kanal (28) dazu eingerichtet ist, trockene Rückstände aufzunehmen, die beim Trockenschneiden des Werkstücks entstehen, und ein Kommunikationselement (70) aufweist, das dazu eingerichtet ist, den ersten Kanal (28) mit einem Absaugsystem zum Absaugen der trockenen Rückstände aus dem ersten Kanal (28) zu verbinden, wenn das Sammelelement (20) im ersten Modus ist, **dadurch gekennzeichnet, dass** sich ein länglicher zweiter Kanal (30) in das Sammelelement (20) von dessen zweiter Außenfläche (49) und längs entlang des Sammelelements (20) erstreckt und dass das Sammelelement (20) im ersten Modus und in einem zweiten Modus wahlweise und abwechselnd lösbar mit dem Hauptkanal (15) in Eingriff bringbar ist, wobei der zweite Kanal (30) dazu eingerichtet ist, nasse Rückstände aufzunehmen, die beim Nassschneiden des Werkstücks entstehen.

2. Plattform nach Anspruch 1, **dadurch gekennzeichnet, dass** der Hauptkanal (15) in der Plattform (1) angeordnet ist, so dass, wenn das Sammelelement (20) im ersten Modus im Hauptkanal (15) angeordnet ist, der erste Kanal (28) mit einer durch die Scheibensäge (8) definierten Ebene ausgerichtet ist, durch die die Drehachse (13) der Scheibensäge (5) senkrecht verläuft.

3. Plattform nach Anspruch 1 oder 2, **dadurch gekennzeichnet, dass** der erste Kanal (28) mit einem relativen Bewegungspfad zwischen der Scheibensäge (5) und der Plattform (1) ausgerichtet ist, wenn das Sammelelement (20) im ersten Modus im Hauptkanal (15) angeordnet ist.

4. Plattform nach einem der vorhergehenden Ansprüche, **dadurch gekennzeichnet, dass** der zweite Kanal (30) mit der durch die Scheibensäge (5) definierten Ebene ausgerichtet ist, durch die die Drehachse (13) der Scheibensäge senkrecht verläuft, wenn das Sammelelement (20) im zweiten Modus im Hauptkanal (15) angeordnet ist.

5. Plattform nach einem der vorhergehenden Ansprüche, **dadurch gekennzeichnet, dass** der zweite Kanal (30) mit dem relativen Bewegungspfad zwischen der Scheibensäge (5) und der Plattform (1) ausgerichtet ist, wenn das Sammelelement (20) im zweiten Modus im Hauptkanal (15) angeordnet ist.

6. Plattform nach einem der vorhergehenden Ansprüche, **dadurch gekennzeichnet, dass** der erste Kanal (28) dazu angepasst ist, einen Randabschnitt der Scheibensäge (5) aufzunehmen, wenn das Sammelelement (20) im ersten Modus im Hauptkanal (15) angeordnet ist, und der zweite Kanal (30) dazu angepasst ist, einen Randabschnitt der Scheibensäge (5) aufzunehmen, wenn das Sammelelement (20) im zweiten Modus im Hauptkanal (15) angeordnet ist.

7. Plattform nach einem der vorhergehenden Ansprüche, **dadurch gekennzeichnet, dass** eine Halteeinrichtung (64) zum lösbaren Halten des Sammelelements (20) im Hauptkanal (15) vorgesehen ist, wobei die Halteeinrichtung zumindest einen Magneten (64) umfasst.

8. Plattform nach einem der vorhergehenden Ansprüche, **dadurch gekennzeichnet, dass** die durch das Sammelelement (20) definierte erste Außenfläche (47) dazu angepasst ist, eine erste Ebene zu definieren, und die erste Außenfläche (47) des Sammelelements (20), wenn das Sammelelement im ersten Modus angeordnet ist, so eingerichtet ist, dass die durch die erste Außenfläche (47) des Sammelelements definierte erste Ebene im Wesentlichen mit einer Hauptebene übereinstimmt, die durch die Werkstückaufnahmefläche (7) der Plattform (1) definiert ist.

9. Plattform nach einem der vorhergehenden Ansprüche, **dadurch gekennzeichnet, dass** die durch das Sammelelement (20) definierte zweite Außenfläche (49) dazu angepasst ist, eine zweite Ebene zu definieren, und die zweite Außenfläche (49) des Sammelelements (20), wenn das Sammelelement im zweiten Modus angeordnet ist, so eingerichtet ist, dass die durch die zweite Außenfläche (49) definierte zweite Ebene im Wesentlichen mit der Hauptebene übereinstimmt, die durch die Werkstückaufnahmefläche (7) der Plattform (1) definiert ist.

10. Plattform nach einem der vorhergehenden Ansprüche, **dadurch gekennzeichnet, dass** das Kommunikationselement (70) ein Gehäuse (70), das einen hohlen Innenbereich (71) definiert, und eine Einlassöffnung (68) zum hohlen Innenbereich (71) umfasst, wobei die Einlassöffnung (68) zum hohlen Innenbereich (71) des Gehäuses (70) des Kommunikationselements so eingerichtet ist, dass sie mit einer Auslassöffnung (73) des Sammelelements (20) in Verbindung steht, die mit dem ersten Kanal (28) in Verbindung steht.

11. Plattform nach Anspruch 10, **dadurch gekennzeichnet, dass** sich die Einlassöffnung (68) zum Kommunikationselement (70) durch eine Seitenwand (75) des Gehäuses (70) des Kommunikationselements (70) erstreckt und das Sammelelement (20) im ersten Modus im Hauptkanal (15) so angeordnet ist, dass die Auslassöffnung (73) vom ersten Kanal (28) mit der Einlassöffnung (68) zum Kommunikationselement (70) in Verbindung steht.

12. Plattform nach einem der vorhergehenden Ansprüche, **dadurch gekennzeichnet, dass** der erste Kanal (28) eine Basis (25) und ein Paar voneinander beabstandeter Seitenwände (22) umfasst, das sich von der Basis (25) erstreckt, und ein Paar erster Werkstückaufnahmewände (32) sich von den jeweiligen Seitenwänden (22), die den ersten Kanal (28) definieren, nach innen aufeinander zu erstreckt, wobei die ersten Werkstückaufnahmewände (32) einen länglichen ersten Schlitz (38) definieren, der sich im Wesentlichen über die Länge des ersten Kanals (28) erstreckt und mit dem ersten Kanal (28) in Verbindung steht.

13. Plattform nach einem der vorhergehenden Ansprüche, **dadurch gekennzeichnet, dass** der zweite Kanal (30) eine Basis (25) und ein Paar voneinander beabstandeter Seitenwände (22, 26) umfasst, das sich von der Basis (25) erstreckt, und ein Paar zweiter Werkstückaufnahmewände (40) sich von den jeweiligen Seitenwänden (22), die den zweiten Kanal (30) definieren, nach innen aufeinander zu erstreckt, wobei die zweiten Werkstückaufnahmewände (40) einen länglichen zweiten Schlitz (45) definieren, der sich im Wesentlichen über die Länge des zweiten Kanals (30) erstreckt und mit dem zweiten Kanal (30) in Verbindung steht.

14. Scheibensägevorrichtung umfassend die Werkstückplattform (1) nach einem der Ansprüche 1 bis 13.

## Revendications

1. Plate-forme pour pièce à usiner pour un appareil à scie circulaire, la plate-forme (1) définissant une surface de réception d'une pièce à usiner (7), et ayant un canal principal allongé (15) s'étendant dans la plate-forme (1) à partir de la surface de réception d'une pièce à usiner (7), et longitudinalement le long de la plate-forme (1) dans la direction du mouvement relatif entre la plate-forme (1) et une scie circulaire (8) de l'appareil (2), un élément collecteur de résidus allongé (20) définissant des première et seconde faces externes allongées opposées (47, 49) et ayant un premier canal allongé (28) s'étendant dans l'élément collecteur (20) à partir de la première face externe (47) et longitudinalement le long de l'élément collecteur (20), l'élément collecteur (20) étant engageable de manière amovible dans le canal principal (15) dans un premier mode avec le premier canal (28) configuré pour recevoir des résidus secs résultant de la coupe à sec de la pièce à usiner, et un élément de communication (70) configuré pour faire communiquer le premier canal (28) avec un système d'extraction pour extraire les résidus secs du premier canal (28) lorsque l'élément collecteur (20) est dans le premier mode, **caractérisé en ce qu'**un second canal allongé (30) s'étend dans l'élément collecteur (20) à partir de la seconde face externe (49) de celui-ci et longitudinalement le long de l'élément collecteur (20), et l'élément collecteur (20) est sélectivement et alternativement engageable de manière amovible dans le canal principal (15) dans le premier mode et dans un second mode avec le second canal (30) configuré pour recevoir des résidus humides résultant de la coupe humide de la pièce à usiner.

2. Plate-forme selon la revendication 1, **caractérisée en ce que** le canal principal (15) est situé dans la plate-forme (1), de sorte que lorsque l'élément collecteur (20) est situé dans le canal principal (15) dans le premier mode, le premier canal (28) est aligné avec un plan défini par la scie circulaire (8) à travers lequel l'axe de rotation (13) de la scie circulaire (5) s'étend perpendiculairement.

3. Plate-forme selon la revendication 1 ou 2, **caractérisée en ce que** le premier canal (28) est aligné sur une trajectoire de déplacement relatif entre la scie circulaire (5) et la plate-forme (1) lorsque l'élément collecteur (20) est situé dans le canal principal (15) dans le premier mode.

4. Plate-forme selon l'une quelconque des revendications précédentes, **caractérisée en ce que** le second canal (30) est aligné avec le plan défini par la scie circulaire (5) à travers lequel l'axe de rotation (13) de la scie circulaire s'étend perpendiculairement lorsque l'élément collecteur (20) est situé dans le canal principal (15) dans le second mode.

5. Plate-forme selon l'une quelconque des revendications précédentes, **caractérisée en ce que** le second canal (30) est aligné sur la trajectoire de déplacement relatif entre la scie circulaire (5) et la plate-forme (1) lorsque le collecteur (20) est situé dans le canal principal (15) dans le second mode.

6. Plate-forme selon l'une quelconque des revendications précédentes, **caractérisée en ce que** le premier canal (28) est adapté pour accueillir une portion périphérique de la scie circulaire (5) lorsque l'élément collecteur (20) est situé dans le canal principal (15) dans le premier mode, et que le second canal (30) est adapté pour accueillir une portion périphérique de la scie circulaire (5) lorsque l'élément collecteur (20) est situé dans le canal principal (15) dans le second mode.

7. Plate-forme selon l'une quelconque des revendications précédentes, **caractérisée en ce qu'**un moyen de retenue (64) est fourni pour retenir de manière amovible l'élément collecteur (20) dans le canal principal (15), le moyen de retenue comprenant au moins un aimant (64).

8. Plate-forme selon l'une quelconque des revendications précédentes, **caractérisée en ce que** la première face externe (47) définie par l'élément collecteur (20) est adaptée pour définir un premier plan, et la première face externe (47) de l'élément collecteur (20) lorsque l'élément collecteur est dans le premier mode est configurée de sorte que le premier plan défini par la première face externe (47) de l'élément collecteur coïncide sensiblement avec un plan principal défini par la surface de réception de la pièce à usiner (7) de la plate-forme (1).

9. Plate-forme selon l'une quelconque des revendications précédentes, **caractérisée en ce que** la seconde face externe (49) définie par l'élément collecteur (20) est adaptée pour définir un second plan, et la seconde face externe (49) de l'élément collecteur (20), lorsque l'élément collecteur est dans le second mode, est configurée de sorte que le second plan défini par la seconde face externe (49) coïncide sensiblement avec le plan principal défini par la surface de réception de la pièce à usiner (7) de la plate-forme (1).

10. Plate-forme selon l'une quelconque des revendications précédentes, **caractérisée en ce que** l'élément de communication (70) comprend un boîtier (70) définissant une région intérieure creuse (71), et un orifice d'entrée (68) vers la région intérieure creuse (71), l'orifice d'entrée (68) vers la région intérieure creuse (71) du boîtier (70) de l'élément de communication étant configuré pour communiquer avec un orifice de sortie (73) de l'élément collecteur (20) communiquant avec le premier canal (28).

11. Plate-forme selon la revendication 10, **caractérisée en ce que** l'orifice d'entrée (68) vers l'élément de communication (70) s'étend à travers une paroi latérale (75) du boîtier (70) de l'élément de communication (70), et l'élément collecteur (20) dans le premier mode dans le canal principal (15) est situé avec l'orifice de sortie (73) à partir du premier canal (28) communiquant avec l'orifice d'entrée (68) vers l'élément de communication (70).

12. Plate-forme selon l'une quelconque des revendications précédentes, **caractérisée en ce que** le premier canal (28) comprend une base (25) et une paire de parois latérales espacées (22) s'étendant à partir de la base (25), et une paire de premières parois de réception de pièce à usiner (32) s'étend vers l'intérieur l'une vers l'autre à partir des parois latérales respectives (22) définissant le premier canal (28), les premières parois de réception de pièce à usiner (32) définissant une première fente allongée (38) s'étendant sensiblement le long du premier canal (28) et communiquant avec le premier canal (28).

13. Plate-forme selon l'une quelconque des revendications précédentes, **caractérisée en ce que** le second canal (30) comprend une base (25) et une paire de parois latérales espacées (22, 26) s'étendant à partir de la base (25), et une paire de secondes parois de réception de pièce à usiner (40) s'étendant vers l'intérieur l'une vers l'autre à partir des parois latérales respectives (22) définissant le second canal (30), les secondes parois de réception de pièce à usiner (40) définissant une seconde fente allongée (45) s'étendant substantiellement le long du second canal (30) et communiquant avec le second canal (30).

14. Appareil de scie circulaire comprenant la plate-forme pour pièce à usiner (1) selon l'une quelconque des revendications 1 à 13.
